# EUROPÄISCHE PATENTSCHRIFT

(11) **EP 1 196 509 B1**
(45) Veröffentlichungstag und Bekanntmachung des Hinweises auf die Patenterteilung: **21.04.2004**
(21) Anmeldenummer: 00949218.2
(22) Anmeldetag: 28.06.2000
(51) Int. Cl.: C09J 9/00, C08J 3/12, B29B 9/06

(54) **SCHMELZ-HAFTKLEBSTOFF IN FORM EINES GRANULATES**
HOT-MELT-TYPE ADHESIVE IN THE FORM OF A GRANULATE
ADHESIF FUSIBLE SOUS FORME D'UN GRANULAT

(30) Priorität: 09.07.1999 DE 19931996
(43) Veröffentlichungstag der Anmeldung: 17.04.2002
(73) Patentinhaber: Henkel Kommanditgesellschaft auf Aktien, 40589 Düsseldorf-Holthausen (DE)
(72) Erfinder: CZMOK, Michael, D-41541 Dormagen (DE); VOGEL, Rainer, D-40764 Langenfeld (DE); KIK, Michael, D-40764 Langenfeld (DE); HATFIELD, Stephen, D-40589 Düsseldorf (DE); PETRY, Gerald, D-41836 Hückelhoven (DE)
(86) Internationale Anmeldenummer: PCT/EP2000/005997
(87) Internationale Veröffentlichungsnummer: WO 2001/004229

(56) Entgegenhaltungen:
- EP-A- 0 531 927
- WO-A-99/18147
- US-A- 3 911 193

## Beschreibung

Die Erfindung betrifft ein Verfahren zur Herstellung eines Schmelz-Haftklebstoffes in Form eines Granulates sowie einen Schmelz-Haftklebstoff, hergestellt nach dem erfindungsgemäßen Verfahren, mit mindestens einer äußeren Schicht aus mindestens einer nichthaftklebrigen Komponente des Schmelz-Haftklebstoffes und mit einem davon umgebenen Kern aus den restlichen Komponenten des Schmelz-Haftklebstoffes.

Derartige Granulate aus auf der Schmelze aufzutragenden Haftklebstoffen sind bekannt. So wird in der EP 531 927 ein formstabiler Schmelz-Haftkleber mit Harzen, Elastomeren und Weichmachern als Hauptbestandteilen beschrieben. Sie haben die Form von Pastillen oder Granulaten, wobei deren Oberfläche aus anhaftendem Puder eines schmelzfähigen und rezeptkonformen Elastomeren besteht. Vorzugsweise kompensiert das pulverförmige Elastomer einen Minderanteil des Elastomers im Schmelz-Klebstoff des Kerns. Das bepuderte Granulat wird hergestellt, indem man Tropfen von geschmolzenem Schmelz-Klebstoff auf ein Transportband mit Puder ablegt und überpudert. Nachteilig hierbei ist, daß durch das Puder nur ein partieller Schutz der Oberfläche vor unerwünschten Verklebungen gegeben ist. Die Granulate tendieren nämlich bei längerer Lagerung zum kalten Fluß und verblocken dabei. Sie sind also nicht mehr rieselfähig.
Ähnliche Nachteile treten bei den rieselfähigen Teilchen gemäß der DE 20 34 038 auf. Diese Teilchen mit einem Durchmesser von vorzugsweise 1 bis 30 mm bestehen aus einem klebenden formfesten Stoff im Kern und einer Puderschicht auf dessen Oberfläche. Die Teilchen bestehen vorzugsweise aus einem klebenden thermoplastischen Kunststoff, insbesondere aus einem ataktischen Polyolefin wie z.B. Polybuten-1 oder PP und sind mit einer Puderschicht aus einem arteigenen oder artähnlichen Stoff eines harten thermoplastischen Kunststoffes bedeckt, z.B. mit einem isotaktischen Polyolefin wie Polybuten-1. Zu ihrer Herstellung werden die zu bepudemden Teilchen durch Strangpressen und Schneiden gebildet und in einem Wirbelbett gleichzeitig mit der Abkühlung der aus der heißen Schmelze erhaltenen Teilchen bepudert. Der Puder ist fest. Die zu bepudemden Teilchen können in einem noch fast flüssigen Zustand sein oder aber so weit abgekühlt sein, daß sie nur noch eben kleben.

In der US 4,359,492 wird die Beschichtung von Pellets aus klebrigen elastomeren Materialien mit staubartigen Mitteln beschrieben. Bei den elastomeren Materialien handelt es sich vorzugsweise um Haftklebstoffe und bei den staubartigen Mitteln um krümelige Polymere mit einer Erweichungstemperatur von mindestens 95 °C.

In der EP 294 141 werden beschichtete Pellets aus synthetischen Polymeren beschrieben, z.B. EVA, beschichtet mit PE. Sie werden hergestellt, indem man
a) ein erstes synthetisches Polymer zu einem Strang oder zu Pellets extrudiert,
b) den Strang im noch geschmolzenen Zustand zu Pellets schneidet,
c) die Pellets mit Pulver eines zweiten Polymeren pudert, wobei das Pulver aufgrund der hohen Temperatur der Pellets schmilzt und eine Schicht bildet,
d) die beschichteten Pellets kühlt.
Das Pulver kann auf 30 bis 40 °C vor dem Auftrag erwärmt werden. Die beschichteten Pellets kleben nicht aneinander. Nachteilig an den beschriebenen beschichteten Pellets ist, daß die einhüllende Schicht nicht geschlossen ist und Anteile aus der Schmelze austreten können ("Ausbluten").

In der WO 96/00747 wird ein Verfahren zum Beschichten von Schmelzklebstoffen beschrieben, das im wesentlichen folgende Schritte umfaßt
a) Extrusion des Schmelzklebstoffes durch eine geeignete Düse,
b) Besprühen der Oberfläche des extrudierten Schmelzklebstoffes mit einem geschmolzenen filmbildenden polymeren Material mit niedrigerem Molekulargewicht oder mit einer Polymer-Formulierung, wobei das Beschichtungsmaterial die Eigenschaften der Klebstoff-Zusammensetzung nach deren Wiederaufschmelzen nicht nennenswert verschlechtert.
c) Erwärmen der Oberfläche des beschichteten Klebstoffes, so daß das filmbildende Polymer wiederaufgeschmolzen wird und eine kontinuierliche Beschichtung bildet und
d) Abkühlen des so beschichteten Klebstoffes auf Temperaturen, die für die Handhabung geeignet sind.
Der extrudierte Schmelzklebstoff kann nach seiner Extrusion und vor seiner Sprühbeschichtung abgekühlt werden. Bevorzugt wird aber eine direkte Beschichtung nach der Extrusion. Das beschichtete Extrudat wird schließlich geschnitten. Nachteilig an diesem Verfahren und den dabei entstehenden Produkten ist, daß die Schnittstellen nicht beschichtet sind. Die Portionen sind daher nicht rieselfähig.
In der EP 14 467 wind ein Verfahren zur Unterwasser-Granutierung von EthylenCopolymeren beschrieben, z.B. von Ethylen-Vinyl-Acetat-Copolymeren, wobei zur Verringerung der Agglomerierung 1 bis 1 000 ppm eines oberflächenaktiven Mittels dem Wasser zugesetzt werden soll. Dadurch wird die Agglomerationstemperatur um mindestens 10 °C erhöht.

In der WO 97/19582 wird eine thermoplastische Polymer-Zusammensetzung mit nichtklebriger Oberfläche in Pellet-Form beschrieben, die zu 97 bis 99,9 Gew.-% aus einem Haftklebstoff und zu 0,1 bis 3 Gew.-% aus einem Pelletier-Mittel besteht, welches die thermoplastische Zusammensetzung umgibt. Als Pelletier-Mittel werden Stoffe aus der Gruppe PE-Wachs, modifiziertes PE-Wachs, PA-Wachs und Stearamid-Wachs sowie deren Mischungen konkret genannt. Sie sind pulverförmig. Es wird auch die Unterwassergranulierung als Herstellverfahren für die klebrigen Schmelzklebstoff-Pellets erwähnt, aus denen unter Verwendung der Pelletier-Mittel Pellets mit nichtklebrigen Oberflächen hergestellt werden, die nicht blocken. Die Herstellung umfaßt folgende Schritte:
- Herstellung einer Schmelzemischung aus den Ausgangskomponenten,
- Bildung von Pellets mit Hilfe von Düsen,
- Verfestigung der Pellets durch Kühlung,
- Anwendung des Pelletier-Mittels an einigen Stellen während der Pelletierung und
- Trocknung.

Das Pelletier-Mittel soll bei jedem Extruder-Durchgang angewendet werden. Es wird dem Kühlmedium zugesetzt. Seine Konzentration im Wasser liegt im Bereich von 0,1 bis 3 Gew.-%.
Das offenbarte Verfahren führt nicht zu den beschriebenen Produkten, insbesondere nicht zu riesetfähigen Granulaten nach einer Lagerung über 3 Monate bei 30 °C, bei einer Schichtdicke der Granulate von 15 bis 30 cm. Die Granulate verkleben untereinander und mit der Verpackung.

In der EP 156 274 wird ein wäßriges Trennmittel zur oberflächlichen temporären antiadhäsiven Ausrüstung von klebrigen Pastillen, Granulaten usw. beschrieben, das aus einer 0,5 bis 25 Gew.-%igen Lösung bzw. Dispersion eines mindestens difunktionellen aliphatischen Alkohols mit 3 bis 7 Kohlenstoffatomen und/oder einer mindestens trifunktionellen aliphatischen Hydroxycarbonsäure bzw. deren wasserlösliche Salze besteht. Gegebenenfalls können noch 0,2 bis 15 Gew.-% an wasserunlöslichen Salzen einer C₁₂- bis C₃₆-aliphatischen oder alicyclischen Mono- oder Dicarbonsäure zusätzlich mitverwendet werden. Das Trennmittel dient vor allem dazu, Granulate aus Haftschmetzklebstoffen antiadhäsiv auszurüsten. Dazu wird das Granulat mit der Lösung bzw. der Suspension bei 18 bis 22 °C behandelt und anschließend nach dem Absaugen der Lösung bzw. der Suspension mit 30 °C warmer Luft in 15 Minuten getrocknet. Das Granulat enthält dann 0,3 bis 0,5 Gew.-% an Wirksubstanz. Es ist schutzfähig. Die Trennwirkung bleibt zumindest 3 Monate bei 25 °C erhalten. Sie reicht jedoch nicht aus, daß die Lagertemperatur und der Lagerdruck erhöht wird. Außerdem ist das Ausrüstungsverfahren wegen der Agglomerierung der noch nicht ausgerüsteten Granulate schwierig.

In dem deutschen Gebrauchsmuster 9116662.4 wird eine verpackte Klebstoffzusammensetzung beschrieben, wobei eine Menge von im wesentlichen homogenen separaten Portionsstücken der Klebstoffzusammensetzung vollständig von einem Netz oder einem Sack aus einem Kunststoffverpackungsmaterial umgeben ist, vorzugsweise von einem zugeschweißten Beutel. Die separaten Portionen sind vorzugsweise äußerlich mit einer trennenden Antihaft-Substanz überzogen. Trotz dieser Antihaft-Substanzen kleben die Portionen aneinander aufgrund von Rissen von Abschälungen der Überzugsmaterialien, insbesondere nach langem Lagern bei schwankenden Temperaturen. Dann liegen die Oberflächen der einzelnen Klebstoffportionen frei und kleben aneinander. Das macht ihre Handhabung schwierig, insbesondere die Dosierung der Schmelz-Haftklebstoffe. Zur Vermeidung dieses Nachteils werden die Klebstoff-Portionen trotz ihrer Antihaft-Beschichtung in einem Beutel verpackt, der dann gehandhabt wird. Er enthält vorzugsweise 100 bis 4 000 einzelne Portionsstücke. Nachteilig bei diesem Einschweißen von unzureichend beschichteten Portionen in ein Beutel ist, daß die eingeschlossene Luft ein Eintauchen des Beutels in Schmelzebecken verhindert. Er schwimmt auf der Klebstoffschmelze, wodurch die Aufschmelzzeit verzögert wird. Oder es werden größere Schmelzgerät benötigt, als eigentlich notwendig wäre.

In der WO 99/18147 wird eine Schmelzklebstoff-Zusammensetzung in Pellet-Form beschrieben, enthaltend einen Pelletisier-Hilfsstoff und eine thermoplastische Zusammensetzung, wobei der Pelletisier-Hilfsstoff die thermoplastische Zusammensetzung umgibt. Als Pelletisier-Hilfsstoff werden thermoplastische Polymere, klebrigmachende Harze und Mischungen daraus beansprucht. Die Herstellung der Pellets umfasst die Herstellung der Klebstoff-Zusammensetzung, die Bildung der Pellets erfolgt beispielsweise durch Unterwassergranulierung. Ein nichtblockender Klebstoff-Bestandteil wird als äußere Schicht auf die Klebstoff-Zusammensetzung aufgebracht.

Von diesem Stand der Technik geht die Erfindung aus. Ihr liegt die Aufgabe zugrunde, einen Schmelz-Haftklebstoff zur Verfügung zu stellen, der auch nach langer Lagerung bei wechselnden Temperaturen sowie einem hohen Eigendruck noch gut zu handhaben, insbesondere leicht zu dosieren ist. Weiterhin gehört dazu

die Vermeidung einer Verklebung untereinander oder mit der Gebindeverpackung. Auch sollte ein schnelles Aufschmelzen ermöglicht werden. Natürlich dürfen die klebetechnischen Eigenschaften durch die antiadhäsive Ausrüstung nicht nachteilig beeinflußt werden.

Die Lösung ist den Patentansprüchen zu entnehmen. Sie besteht im wesentlichen in der Erzeugung einer vollständigen kompakten Beschichtung eines Granulat-Kernes mit artähnlichem Material.
Gegenstand der Anmeldung ist also in erster Linie ein Verfahren zur Herstellung eines Schmelz-Klebstoffes in Form eines Granulates mit mindestens einer kompakten äußeren Schicht (Schale) aus mindestens einer bis 40 °C nichthaftklebrigen Komponente des Schmelz-Haftklebstoffes und mit einem davon umgebenen Kern aus den restlichen Komponenten des Schmelz-Haftklebstoffes.
Die äußeren Schichten umgeben den Kern so vollständig, vorzugsweise zu 90, insbesondere zu 99 % der Kemoberfläche, daß das Granulat rieselfähig bleibt.

Dieser Grad der Bedeckung wird durch Flächenauswertung mikroskopischer Aufnahmen bestimmt.
Rieselfähig bedeutet, daß das Granulat aufgrund seines Eigengewichtes auch nach einer Lagerung von 4 , zumindest von 2 Monaten bei Temperaturen von -10 bis +40 °C im wöchentlichen Turnus sowie bei einem Eigendruck von 30 cm Füllhöhe noch durch eine Öffnung von 5 cm Durchmesser "fließt".
Das Granulat hat einen Komdurchmesser von 1 bis 30, vorzugsweise von 4 bis 10 mm. Die Korngröße wird durch Siebanalyse bestimmt. Vorzugsweise hat das Kom eine kugelartige Form. Sie kann aber auch elyptisch sein.
Überraschend ist, daß die Rieselfähigkeit auch nach extremen Bedingungen trotz eines nur geringen Gewichtsanteils der äußeren Schichten an dem Schmelz-Klebstoff insgesamt erzielt wird. Der Gewichtsanteil der äußeren Schichten an dem Schmelz-Klebstoff insgesamt beträgt 0,5 bis 10, vorzugsweise 1 bis 5, insbesondere 1 bis 2 Gew.-%. Der Gewichtsanteil wird bestimmt, indem man eine statistische Verwiegung vornimmt.
Die äußeren Schichten haben einen Schmelzpunkt nach ASTM D 3461 oder eine Erweichungstemperatur nach der R+B-Methode von weniger als 130, vor allem von weniger als 120 und insbesondere von weniger als 110 °C. Er liegt jedoch in der Regel oberhalb von 95 °C, insbesondere von 115 °C. Die Meßmethoden werden durchgeführt gemäß ASTM D 3461.
Die äußeren Schichten bestehen zumindest zum Teil aus einem Material, welches auch im Kern enthalten ist. Natürlich kommen auch Materialmischungen in Frage, wobei jedoch zweckmäßigerweise Tackifier möglichst zu vermeiden sind.
Die äußere Schicht kann auch aus einem niedermolekularen nicht spröden Rohstoff zur Herstellung des Schmelz-Haftklebstoffes bestehen, vorzugsweise aus einem Weichmacher.

Vorzugsweise besteht jedoch die äußerste Schicht zu mehr als 50 Gew.-% aus mindestens einem Polymeren, vorzugsweise einem thermoplastischen Elastomeren, insbesondere aus einer Gruppe, welche besteht aus Polymeren auf Ethylengrundlage, wie Ethylen/Vinylacetat, Ethylenacrylat, Ethylenmethacrylat, Ethylenmethylacrytat, Ethylenmethylmethacrylat, Polyethylen mit hoher und niedriger Dichte, Polyethylenmischungen und chemisch modifiziertes Polyethylen, Copolymere von Ethylen und zweifach-ungesättigten Monomeren, Polybutadienkautschuk, Polyester wie Polyethylenterephthalat, Polybutylenterephthalat; thermoplastische Polycarbonate, ataktische Poly-α-Olefine, einschließlich ataktisches Polypropylen und andere; thermoplastische Polyacrylamide, Homo- und Copolymere - insbesondere Blockcopolymere - von Acrylonitril und anderen Monomeren wie Butadien und Styrol; Polymethylpenten, Polyphenylensulfid, Polyurethane; Styrol-Acrylonitril, Styrol-Butadien-Kautschuke, Polyphenylensulfid, Elastomere vom Typ A-B-, A-B-A-, A-(B-A)ₙ-B-, (A-B)ₙ-Y-Blockcopolymere, worin das A einen aromatischen Polyvinylblock - vor allem Styrol - umfaßt, der B-Block einen Kautschukmittelblock - vor allem Butadien oder Isopren - umfaßt, der teilweise hydriert sein kann, und Mischungen dieser Substanzen.

Zweckmäßig wählt man eine derartige Zusammensetzung für die äußere Schicht aus, die zusammen mit dem Kern der gewünschten Zusammensetzung entspricht, die auch ohne Beschichtung angewendet würde. Mit anderen Worten, die Art und Menge des Beschichtungsmaterials entspricht der Differenz der abgefüllten Zusammensetzung zur gewünschten Klebstoffzusammensetzung. Es kann also die Granulat-Schicht aus einer Schmelzklebstoffzusammensetzung bestehen, die zusammen mit dem Granulat-Kern einen Haftschmelzklebstoff nach dem Aufschmelzen ergibt. In diesem Fall ist es ausgeschlossen, daß das Beschichtungsmaterial die Eigenschaften der Klebstoffzusammensetzung in irgendeiner Weise nachteilig beeinflußt.

Als besonders geeignetes Beschichtungsmaterial wird das Ethylen-Vinyl-Acetat-Copolymer mit einem Vinylacetat-Gehalt von 10 bis 45 %, insbesondere von 15 bis 30 %, und einem Erweichungspunkt von 80 bis 130 °C vorgeschlagen. Deren Schmelzindex liegt im Bereich von etwa 1 bis 2 500, insbesondere bei etwa 6 bis 400, gemessen nach ASTM D 1238/90 b.

Besonders thermoplastische Elastomere wie Styrol-Blockcopolymere eignen sich sehr gut zur Herstellung der Beschichtung. Gleiches gilt auch für Polyisopren.

Falls die Schmelz- oder Erweichungstemperatur der Polymere zu hoch sein sollte, kann sie durch Mischen mit anderen Klebstoff-Komponenten, z. B. mit Wachsen oder Weichmachern, herabgesetzt werden. Natürlich darf die Mischung nicht haftklebrig werden. Sie sollte möglichst auch nicht zum Blocken führen.

Bei dem Beschichtungsmaterial kann es sich auch, zumindest anteilig, um einen Kunststoff bzw. eine Kunststoff-Zusammensetzung handeln, die kein Bestandteil des Schmelzklebstoffs darstellt, aber zum gleichzeitigen Aufschmelzen mit dem Inhalt des Behältnisses geeignet und mit diesem in geschmolzenem Zustand mischbar ist, ohne daß durch das Mischen die Eigenschaften der Klebstoffzusammensetzung wesentlich nachteilig beeinflußt werden. Dabei handelt es sich vor allem um bekannte antiadhäsive Stoffe, z.B. um Polyethylen, vorzugsweise um Polyethylen-Puder.

Das Granulat kann auch aus mehreren Schichten aufgebaut sein, wobei in der Regel der Tackifier den Kern ausmacht, der von einer ersten Schicht aus einer Mischung von Weichmachern und Füllstoffen und mit einer zweiten Schicht aus Polymeren sowie Oxidantien umgeben ist. Die äußere Schicht kann auch aus einer Mischung von Polymeren und Weichmachern bestehen, um auf diese Art und Weise die Schmelztemperatur bzw. Erweichungstemperatur herabzusetzen. Jedoch muß hier sorgfältig der Weichmacher ausgewählt werden, um eine unerwünschte Migration in die Außenschicht zu vermeiden.

Die Beschichtungs-Komponente ist bei der Applikation flüssig, vorzugsweise eine wasserfreie Schmelze. Es kann aber auch eine wäßrige Dispersion mit einem möglichst hohen Feststoffanteil verwendet werden. Als Schmelze seien konkret genannt: Polyethylen-Wachs oder EVA.
Als wäßrige Dispersion seien konkret genannt: Polyethylen-Emulsion, insbesondere Emulsion von Fischer Tropsch-Wachs mit Polyester-Filmbildner sowie Emulsionen auf der Basis von Polyvinyl-Acetat oder EVA.
Sie ist feinteilig, d.h. im Durchschnitt betragen die Durchmesser 0,5 bis 12 µm.

Das Material des Granulat-Kerns entspricht von der Art und Menge der einzelnen Komponenten einer üblichen Schmelz-Klebstoff-Zusammensetzung, insbesondere einer Schmelz-Haftklebstoff-Zusammensetzung, vorausgesetzt, sie ist verträglich mit dem ausgewählten Material der Beschichtung, so daß sich die Beschichtung beim Anwender problemlos im geschmolzenen Schmelzklebstoff lösen läßt. Die Schmelzklebstoffsysteme umfassen eine Vielzahl von Basis-Polymeren, welche mit anderen Inhaltsstoffen wie Weichmachern, Klebrigmachern, Stabilisatoren, Wachsen und Streckmitteln gemischt werden, um den Klebstoff zu bilden. Die Basis-Polymere bestimmen im wesentlichen die Klebschichteigenschaften bezüglich Haftung, Festigkeit und Temperaturverhalten. Die wichtigsten Basis-Polymere sind Polyolefine, Polyamide und Polyurethane.

Olefinische Materialien der äußeren Schicht wie Polyethylen und Poly-(Ethylen-covinyl-Acetat) sind verträglich mit aliphatischen und aromatischen Kohlenwasserstoff-Schmelzklebstoffen. Handelsübliche Schmelzklebstoffzusammensetzungen dieses Typs enthalten Schmelzklebstoffe auf der Basis von Ethylenvinylacetat-Copolymer und von amorphem Propylen-alpha-olefin (APAO). Enthalten sein können auch alle Schmelzklebstoffe auf der Basis von Styrol-Butadien-Styrol(SBS)-Copolymer-A-B-A-B-A-Multiblock, Konstruktions-Schmelzklebstoffe auf der Basis von radialem Styrol-Butadien-Styrol, (SB)ₙ-Copolymeren und Konstruktions-Schmelzklebstoffe auf der Basis von Styrol-Isopren-Styrol (SIS) und A-B-A-Block-Copolymeren. Weitere Polymere sind: Polybuten, Ethylen/Acrylat-, Ethyten/CO- und Propylen/Hexen-Copolymere.

Schmelzklebstoffe auf der Basis von Polyamiden können mit dem erfindungsgemäßen Verfahren ebenfalls verpackt werden, wobei ein Behältnis aus einem entsprechenden Polyamid bevorzugt ist, welches beim gemeinsamen Aufschmelzen mit dem Schmelzklebstoff verträglich ist. Als Polyamide kommen in Frage PA6,6, PA6,10, PA6 und vor allem Polyamide aus Diaminen und dimerisierten Fettsäuren, insbesondere aus Ethylendiamin und dimerisierter Linolsäure. Natürlich kommen auch Copolymere in Frage, z. B. Polyamid/EVA-Copolymere, Polyamid/Siloxan-Copolymere, Polyesteramide, Polyetheramide, Polyesteramidimide und Polyetheresteramide.

Zum Beispiel kann die vorliegende Erfindung auch auf Schmelzklebstoffe angewandt werden, die hergestellt worden sind aus Polymeren und Copolymeren von synthetischen Harzen, Kautschuken, Polyethylen, Polypropylen, Polyurethan, Polyacryl, Polyvinylacetat, Ethylenvinylacetat-Copolymer und Polyvinylalkohol.

Die vorliegende Erfindung ist von besonderem Vorteil für Schmelzklebstoffe mit ernsten Handhabungsproblemen, z. B. für die bereits oben genannten, auch bei Raumtemperatur noch klebrigen Haftschmelzklebstoffe.

Spezielle Beispiele umfassen Schmelzklebstoffe, die aus folgenden Komponenten hergestellt sind:
1) Elastische Polymere wie Block-Copolymere, z. B. Styrol-Butadien, Styrol-Butadien-Styrol, Styrol-Isopren-Styrol, Styrol-Ethylen-Butylen-Styrol, Styrol-Ethylen-Propylen-Styrol;
2) Ethylen-Vinyl-Acetat-Polymere, andere Ethylen-Ester und Copolymere, z. B. Ethylen-Methacrylat, Ethylen-n-Butyl-Acrylat und Ethylen-Acrylsäure;
3) Polyolefine wie Polyethylen und Polypropylen;
4) Polyvinylacetat und Copolymere damit;
5) Polyacrylate;
6) Polyamide;
7) Polyester;
8) Polyvinylalkohole und Copolymere damit;
9) Polyurethane;
10) Polystyrole;
11) Polyepoxide;
12) Copolymere von Vinyl-Monomeren und Polyalkylenoxid-Polymeren;
13) Aldehyde, die Harze enthalten wie Phenol-Aldehyd. Urea-Aldehyd, Melamin-Aldehyd und dergleichen.

Weiter können Komponenten zur Verstärkung der Adhäsion, Plastifiziermittel, Wachskomponenten, Verdünnungsmittel, Stabilisatoren, Antioxidantien, Farb- und Füllstoffe enthalten sein.

Als Komponenten zur Verbesserung der Adhäsion seien beispielhaft genannt:
1) Natürliche und modifizierte Harze,
2) Polyterpen-Harze,
3) phenolisch modifizierte Kohlenwasserstoff--Harze,
4) aliphatische und aromatische Kohlenwasserstoff-Harze,
5) Phthalat-Ester und
6) hydrierte Kohlenwasserstoffe, hydrierte Harze und hydrierte Harz-Ester.

Als Verdünnungsmittel seien beispielhaft flüssiges Polybuten oder Polypropylen, Petroleumwachse wie Paraffin und mikrokristalline Wachse, halbflüssiges Polyethylen, hydrierte tierische, Fisch- und pflanzliche Fette, Mineralöl und synthetische Wachse sowie Kohlenwasserstoff-Öle genannt.

Beispiele für die anderen Additive finden sich in der Literatur. Zur Ergänzung der Offenbarung wird dabei ausdrücklich auf die ausführlichen Angaben in der EP 0 469 564 B1 zum einsetzbaren Schmelzklebstoffsystem, den darin enthaltenen thermoplastischen Polymeren, Klebrigmachem und Weichmachern hingewiesen, wobei der Inhalt dieser Ausführungen zum Bestandteil der vorliegenden Anmeldung gemacht wird.

Gegenstand der Erfindung ist das Verfahren zur Herstellung des Schmelz-Haftklebstoffes in Form eines Granulates. Das Wesentliche dieser Verfahrenserfindung liegt darin, daß man die Temperatur bei der Unterwassergranulierung so niedrig hält, daß das Granulat im wesentlichen keine Oberflächenklebrigkeit aufweist und daß man die Temperatur solange ausreichend niedrig hält, bis die Granulate beschichtet sind. Die dafür erforderlichen niedrigen

Temperaturen können für jeden Haftschmelzklebstoff auf einfache Weise durch Versuche ermittelt werden.
Das Herstellungsverfahren ist dadurch gekennzeichnet, daß man
a) die Kern-Komponenten aufschmilzt,
b) die Schmelze unter Wasser granuliert,
c) das Unterwasser-Granulat auf so niedrige Temperaturen abkühlt, daß die Oberflächen-Klebrigkeit der Kerne für mindestens 15 Minuten unterbunden ist, zweckmäßigerweise auf Temperaturen unter 15, vorzugsweise unter 10, und insbesondere unter 5 °C,
d) das gekühlte Unterwasser-Granulat nach dem Wirbelschicht-Verfahren trocknet und beschichtet, wobei man vorzugsweise kontinuierlich in der ersten Zone einer Wirbelrinne trocknet und gemäß Verfahrensschritt e) in mindestens einer weiteren Zone beschichtet,
e) das getrocknete Unterwasser-Granulat beschichtet, indem man es mit einer feinteiligen flüssigen Beschichtungskomponente besprüht, enthaltend mindestens ein bis 45°C nichthaftklebriges thermoplastisches Elastomer und/oder mindestens einen bis 45°C nichthaftklebrigen Weichmacher, bis eine ausreichend dicke Schicht, vorzugsweise von 5 bis 50 pm Dicke auf dem Kern gebildet ist, und
f) die beschichteten Kerne auf Raumtemperatur von 15 bis 30 °C, insbesondere von ca. 20 °C temperiert.

Die Temperatur des geschmolzenen Klebstoffs ist vorzugsweise derart gewählt, daß deren Viskosität während der Extrusion mindestens 2000 mPas beträgt, gemessen nach Brookfield (ASTM D 3236). Die bevorzugte Klebstofftemperatur während der Extrusion hängt von der Zusammensetzung des Haftschmelzklebstoffs ab. Als vorteilhaft hat es sich bei den üblichen Haftschmelzklebstoffen herausgestellt, daß die Temperatur des Klebstoffs während der Extrusion bei 80 bis 150 °C und insbesondere bei 110 bis 130 °C liegt.

Erfindungswesentlich ist eine niedrige Temperatur der separaten Portionen, insbesondere der Unterwassergranulate bis zu deren Beschichtung. Diese Forderung wird auf eine besonders wirtschaftliche Weise erfüllt, wenn man den geschmolzenen Klebstoff in ein Kühlfluid, insbesondere in ein Wasserbad, extrudiert, dessen Temperatur ausreichend niedrig gewählt ist, so daß die separaten Portionen im wesentlichen keine Oberflächenklebrigkeit aufweisen. Dabei hängt die Temperatur des Kühlfluids von der Klebstoffzusammensetzung ab. Für die üblichen Haftschmelzklebstoffe ist es bevorzugt, wenn die Temperatur des Kühlfluids höchstens 15, vorzugsweise höchstens 10 °C, insbesondere höchstens 5 °C, beträgt.

Im allgemeinen reicht die Kühlung aus, um die Oberflächenklebrigkeit der separaten Portionen bis zu deren Beschichtung zu verhindern. Zur Unterstützung des Kühlungseffektes kann aber auch vorgesehen sein, daß das Kühlfluid ein Trennmittel, insbesondere ein Fettsäurederivat und besonders bevorzugt ein Stearat, enthält. Beim Einsatz eines Trennmittels braucht die Temperatur des Kühlfluids nicht so niedrig wie ohne das Trennmittel zu sein und/oder die Zeitdauer von der Abkühlung der separaten Portionen bis deren Beschichtung verlängert werden kann. Das erfindungsgemäße Verfahren ist aber auch ohne den Einsatz eines Trennmittels durchführbar, wobei dann eine Schwächung der Klebkraft oder eine sonstige negative Beeinflussung der Produkteigenschaften vermieden wird.

Unter Umständen kann eine möglichst niedrige Schüttdichte des erfindungsgemäßen Granulates erwünscht sein. Das wird dadurch erreicht, daß die Granulate im wesentlichen eine Kugelgestalt haben und daß sie unterschiedliche Durchmesser aufweisen. Diese Forderung kann bei einer Extrusion des Klebstoffs in ein Wasserbad erreicht werden, wenn die dazu verwendete Lochplatte Düsen mit unterschiedlichem Querschnitt aufweist

Dabei ist es besonders bevorzugt, wenn zwei unterschiedliche Durchmesser der Granulate vorgesehen sind und wenn der Durchmesser der kleineren Granulate derart gewählt ist, daß diese Granulate in Hohlräumen einer aus den großen Granulaten gebildeten dichtesten Kugelpackung Platz finden und daß die kleineren Granulate bei der Erfüllung dieser Forderung insbesondere den größtmöglichen Durchmesser aufweisen. Diese Ausgestaltung der Erfindung ist also darauf gerichtet, die Hohlräume zwischen den großen Granulaten durch die kleineren Granulate auszufüllen, wobei es besonders bevorzugt ist, wenn die kleineren Granulate allseitig an die Oberfläche der größeren Granulate angrenzen.

Die Mischung von Granulaten unterschiedlicher Größe kann auf verschiedene Weise erreicht werden. Zum einen kann die Lochplatte Düsen unterschiedlichen Querschnitts aufweisen, so daß die unterschiedlich großen Granulate gleichzeitig in demselben Granulierapparat hergestellt und gemischt werden. Zum anderen können die unterschiedlich großen Granulate auch in Granulierapparaten mit unterschiedlichen Düsendurchmessem hergestellt und erst danach gemischt werden.

Für eine möglichst dichte Packung ist es außerdem von Vorteil, wenn 20 bis 40 Gew.-%, insbesondere 30 Gew.-%, des Haftschmelzklebstoffs aus den Granulaten mit kleinerem Durchmesser besteht.

Nach dem Herstellen der separaten Portionen und deren Kühlung mittels eines Kühlfluids, insbesondere Wasser, sollte das Kühlfluid von dem Haftschmelzklebstoff abgetrennt werden. Überraschenderweise hat es sich herausgestellt, daß hierzu eine Trocknung in einem Trommeltrockner mittels warmer Luft mit einer Temperatur von 5 bis 40 °C, insbesondere von 10 bis 25 °C möglich ist, ohne daß die separaten Portionen von Haftschmelzklebstoff an den Wänden des Trockners oder aneinander ankleben und verklumpen.

Die Beschichtungs-Komponente hat beim Aufsprühen eine Temperatur von 20 bis 60, insbesondere von 25 bis 35 °C.

Vorzugsweise wird die Trocknung und Beschichtung in einem Wirbelschichtverfahren durchgeführt, wobei man vorzugsweise kontinuierlich in der ersten Zone einer Wirbelrinne trocknet und in mindestens einer weiteren Zone beschichtet. Derartige Wirbelschichtsverfahren sind in der Arzneimittelindustrie zur Herstellung von Dragées bekannt.
Vorzugsweise wird das Granulat unter starker Bewegung mehrfach statistisch an mindestens einer Düse vorbeigeführt, aus der die Beschichtungs-Komponente auf das Granulat aufgesprüht wird, wobei vorzugsweise die Bewegung entweder durch Verwirbelung mit kalter Luft von 25 bis 50, vorzugsweise von 30 bis 40 °C erfolgt oder aber die Bewegung wird durch einen sich drehenden Behälter erzeugt, z.B. durch eine Trommel. Die Sprühtröpfchen haben eine Größe von 0,5 bis 200 µm, vorzugsweise von 2 bis 20 µm. Beim Auftreffen der Sprühtröpfchen fließt die flüssige Emulsion um die Kern-Oberflächen bzw. Granulatoberflächen und hüllt diese komplett ein. Bei entsprechender Einstellung der Maschinenparameter kann so eine kompakte und vollständig geschlossene Schicht auf die Granulatkeme aufgebracht werden, die auch unter Druck nicht aufspringt oder verklebt.

Die Granulatkömer sind somit vor einem weiteren Verkleben geschützt und können direkt in Kartons, Säcke usw. verpackt werden.
Bei seiner Anwendung werden die rieselfähigen Granulate aufgeschmolzen und als Schmelze appliziert.

Die erfindungsgemäße Lösung bietet gegenüber z.B. der Puder-Beschichtung folgende Vorteile: Vollkommen geschlossene Oberfläche, sauberes Verfahren (Staub), bessere Kontrolle der Beschichtung, leichtere bzw. bessere Handhabung beim Kunden.

Die Erfindung wird nun im einzelnen anhand eines Beispieles erläutert:

### Ausführungsbeispiel

Das Beispiel wurde mit dem sehr klebrigen Haftschmelzklebstoff Euromelt 654 (Produkt der Fa. Henkel KGaA) durchgeführt. Er besteht im wesentlichen aus einem Polymer auf Kautschukbasis, Mineralölen und Harzen. Der Erweichungspunkt, der nach Ring und Ball gemessen worden ist und als R+B-Wert abgekürzt wird, liegt bei 95 °C, und die Viskosität beträgt 2000 mPas bei 160 °C, 4900 mPas bei 140 °C und 17000 mPas bei 120 °C.

Das Produkt wurde wie üblich aus den Rohstoffen im Rührwerk bei 160 °C hergestellt. Zur Erhöhung der Viskosität legte man das Produkt im Rührwerk vor und ließ es dort abkühlen. Zwei Tage später hatte das Produkt die Temperatur von 115 °C erreicht, und es wurde bei dieser Temperatur in einer Anlage der Fa. Gala Industries weiterverarbeitet, die für die Unterwassergranulierung von nicht oberflächenklebrigen Schmelzklebstoffen geeignet ist. Zur Aufrechterhaltung der Produkttemperatur von 115 °C war eine Begleitheizung mit einer Temperatur von 120 °C vorhanden. Das Produkt wurde von einer Schmelzepumpe (Drehzahl 10 - 25 Upm) über ein Gneußfilter (T = 115 °C) und eine Anfahrweiche (T = 115 °C) direkt zu einer beheizten Lochplatte (T = 130 °C) geführt.

Die Schmelze wurde durch 50 kreisförmig angeordnete Bohrungen der Lochplatte hindurchgedrückt. Die Bohrungen hatten einen Durchmesser von 2,8 mm. Der Produktdurchsatz wurde zwischen 90 und 380 kg/h variiert. Die vier mit einer Drehzahl von 1600 Upm rotierenden Messer, die unmittelbar an der Auslaßseite der Lochplatte, also ebenfalls unter Wasser, angebracht waren, zerteilten die austretenden Klebstoffstränge.

Der Wasserstrom wurde unmittelbar an der Auslaßseite der Lochplatte vorbeigeführt. Das Wasser wurde durch Zugabe von Eis auf eine Temperatur von 6 °C gehalten. In diesem Ausführungsbeispiel wurde dem Wasser 3 % des Trennmittels SPL 117 (Produkt der Fa. Henkel KGaA, auf der Basis von Calciumstearat) hinzugefügt. Das erfindungsgemäße Verfahren ist jedoch auch ohne Zugabe von Trennmitteln mit guten Ergebnissen durchführbar.

Es entstanden kugelförmige Granulate, die vom Wasserstrom weiter zur an sich bekannten Vorentwässerung transportiert wurden. Das abgetrennte Wasser wurde zurückgeführt. Dabei kann es mittels eines Wärmetauschers und/oder eines Kühlaggregats auf der gewünschten Temperatur gehalten werden.

Die vorentwässerten Granulate wurden während einer Zeitdauer von etwa 15 min in einer Trockentrommel nachgetrocknet, die mit erwärmter Luft (T = 30 °C) betrieben wurde. Durch die Abkühlung der Granulate auf etwa 6 °C konnte die Oberflächenklebrigkeit für etwa 20 min soweit verhindert werden, so daß in überraschender Weise sogar die Trocknung in der Trockentrommel problemlos möglich war.

Die getrockneten Granulat-Kerne hatten eine Restfeuchtigkeit von weniger als 0,3 Gew.-% und wurden unmittelbar nach dem Austritt aus der Trockentrommel in einem Wirbelschichtverfahren beschichtet. Dazu diente eine Wirbelschichtanlage mit Sprüheinrichtung für die Emulsion.
Das Beschichtungsmaterial bestand aus folgenden Komponenten: Polyethylen-Wachs, Entschäumer und Filmbildner in Wasser.
Es ist als Beschichtungsfilm bis zu einer Temperatur von 45 °C nicht klebrig und erweicht bei 115 °C (R+B-Methode).
Erhalten wurde ein beschichtetes Granulat mit folgenden Eigenschaften:
- Der Gewichtsanteil der Schicht betrug 0,5 bis 1,0 Gew.-%, bezogen auf das Gewicht des Schmelz-Haftklebstoffes insgesamt.
- Die Dicke der Schicht betrug 20 µm.
- Die Oberfläche des Granulat-Kernes war zu 98 % abgedeckt.
- Das Granulat war bis 45 °C rieselfähig.
- Das Granulat hatte einen Korndurchmesser von ca. 5 bis 15 mm.
- Die Klebeeigenschaften waren zumindest gleich gut wie die Klebeeigenschaften der Kern-Komponente, wie Spray-Tests unter üblichen Anwendungen zeigen.

## Patentansprüche

1. Verfahren zur Herstellung eines Schmelz-Haftklebstoffes in Form eines Granulates, **dadurch gekennzeichnet, dass** man
a) die Kern-Komponenten aufschmilzt,
b) die Schmelze unter Wasser granuliert,
c) das Unterwasser-Granulat auf so niedrige Temperaturen abkühlt, dass die Oberflächen-Klebrigkeit der Kerne für mindestens 15 Minuten unterbunden ist, zweckmäßigerweise auf Temperaturen unter 15, vorzugsweise unter 10 und insbesondere unter 5°C,
d) das gekühlte Unterwasser-Granulat nach dem Wirbelschicht-Verfahren trocknet und beschichtet, wobei man vorzugsweise kontinuierlich in der ersten Zone einer Wirbelrinne trocknet und gemäß Verfahrensschritt e) in mindestens einer weiteren Zone beschichtet,
e) das getrocknete Unterwasser-Granulat beschichtet, indem man es mit einer feinteiligen flüssigen Beschichtungs-Komponente besprüht, enthaltend mindestens ein bis 45°C nichthaftklebriges thermoplastisches Elastomer und/oder mindestens einen bis 45°C nichthaftklebrigen Weichmacher, bis eine ausreichend dicke Schicht auf dem Kern gebildet ist, und
f) die beschichteten Kerne auf Raumtemperatur von 15 bis 30°C, insbesondere von ca. 20°C temperiert.

2. Verfahren nach dem Anspruch 1, **dadurch gekennzeichnet, dass** das Granulat unter starker Bewegung mehrfach statistisch an mindestens einer Düse vorbeigeführt wird, aus der die Beschichtungs-Komponente auf das Granulat aufgesprüht wird, wobei die Bewegung durch Verwirbelung mit kalter Luft von 25 bis 50, vorzugsweise von 30 bis 40°C erfolgt.

3. Verfahren nach Anspruch 1, **dadurch gekennzeichnet. dass** man das gekühlte Unterwassergrenulat mit Luft von 5 bis 40°C, insbesondere von 10 bis 25°C trocknet.

4. Verfahren nach Anspruch 1, **dadurch gekennzeichnet, dass** die feinteilige, flüssige Beschichtungs-Komponente 20 bis 90, insbesondere 20 bis 40 Gew.-% an Wasser enthält.

5. Vorfahren nach Anspruch 1, **dadurch gekennzeichnet, dass** die Trocknung und Beschichtung innerhalb von 15 Minuten, vorzugsweise innerhalb von 10 Minuten und insbesondere innerhalb 2 Minuten geschieht.

6. Verfahren nach Anspruch 1, **dadurch gekennzeichnet, dass** man den Kern mit den äußeren Schichten zumindest so vollständig beschichtet, dass das Granulat rieselfähig ist, vorzugsweise dass man den Granulatkern zu 90, insbesondere zu 99 % beschichtet.

7. Schmelz-Haftklebstoff in Form eines belichteten Granulates, erhältlich durch das Vedahren nach mindestens einem der Ansprüche 1 bis 6, **dadurch gekennzeichnet, dass** die Beschichtungs-Komponente mindestens einen bis 45°C nichthaftklebrigen Weichmacher enthält.

8. Schmelz-Haftklebstoff nach Anspruch 7, **dadurch gekennzeichnet, dass** das Granulat einen Komdurchmesser von 1 bis 30, vorzugsweise von 4 bis 10 mm hat.

9. Schmelz-Haftklebstoff nach Anspruch 7, **dadurch gekennzeichnet, dass** der Gewichtsanteil der äußeren Schichten 0,5 bis 10, vorzugsweise 1 bis 5 und insbesondere 1 bis 2 Gew.-% des Schmelz-Haftklebstoffes insgesamt ausmacht.

10. Schmelz-Haftklebstoff nach Anspruch 7, **dadurch gekennzeichnet, dass** die äußeren Schichten einen Schmelzpunkt nach DSC-Messungen oder eine Erweichungstemperatur nach der R + B-Methode von weniger als 130 vor allem von weniger als 120 und insbesondere von weniger als 110°C.

11. Schmelz-Haftklebstoff nach Anspruch 7, **dadurch gekennzeichnet, dass** die äußeren Schichten aus einem Material bestehen, das auch im Kern enthalten ist.

12. Schmelz-Haftklebstoff nach Anspruch 7, **dadurch gekennzeichnet, dass** die äußeren Schichten zu mehr als 50 Gew.-% aus mindestens einem thermoplastischen Elastomeren der Gruppe: SBS-, SIS-, Ethylen-Vinylacetat-, Ethylen-Propylen-, Polyether-Urethan-, Polyester-Urethan-, Silikon-, Polyester- und/oder Natur-Kautschuk; bestehen.

13. Verwendung des Schmelz-Haftklebstoffes nach mindestens einem der Ansprüche 7 bis 12 zum Verkleben von Substraten, indem man das Granulat aufschmilzt und dann die Schmelze appliziert.

## Claims

1. A process for the production of a pressure-sensitive hotmelt adhesive in the form of granules, **characterized in that**
a) the core components are melted,
b) the melt is granulated under water,
c) the underwater granules are cooled to such low temperatures that the surface tackiness of the cores is suppressed for at least 15 minutes, preferably to temperatures below 15°C, more preferably to temperatures below 10°C and most preferably to temperatures below 5°C,
d) the cooled underwater granules are dried and coated in a fluidized bed, drying preferably being carried out continuously in the first zone of a fluidizing channel and coating being carried out in step e) in at least one other zone.
e) the dried underwater granules are coated by spraying with the fine-droplet liquid coating component containing at least one thermoplastic elastomer which is not pressure-sensitive up to 45°C and/or at least one plasticizer which is not pressure-sensitive up to 45°C until a sufficiently thick layer has formed on the core and
f) the coated cores are kept at an ambient temperature of 15 to 30°C and more particularly around 20°C.

2. A process as claimed in claim 1, **characterized in that** the granules are placed in a state of intensive motion before being repeatedly guided statistically past at least one nozzle from which the coating component is sprayed onto the granules, the motion of the granules being generated by whirling with cold air at 25 to 50°C and preferably 30 to 40°C.

3. A process as claimed in claim 1, **characterized in that** the cooled underwater granules are dried with air having a temperature of 5 to 40°C and more particularly 10 to 25°C.

4. A process as claimed in claim 1, **characterized in that** the fine-droplet liquid coating component contains 20 to 90% by weight and more particularly 20 to 40% by weight of water.

5. A process as claimed in claim 1, **characterized in that** drying and coating are carried out in 15 minutes, preferably in 10 minutes and more particularly in 2 minutes.

6. A process as claimed in claim 1, **characterized in that** the outer layers coat the core at least so completely that the granules are free-flowing, the cores of the granules being 90% and more particularly 99% covered.

7. A pressure-sensitive hotmelt adhesive in the form of coated granules obtainable by the process claimed in at least one of claims 1 to 6, **characterized in that** the coating component contains at least one plasticizer which is not pressure-sensitive up to 45°C.

8. A pressure-sensitive hotmelt adhesive as claimed in claim 7, **characterized in that** the granules have a diameter of 1 to 30 and preferably 4 to 10 mm.

9. A pressure-sensitive hotmelt adhesive as claimed in claim 7, **characterized in that** the percentage by weight of the outer layers is 0.5 to 10, preferably 1 to 5 and more particularly 1 to 2% by weight of the pressure-sensitive hotmelt adhesive as a whole.

10. A pressure-sensitive hotmelt adhesive as claimed in claim 7, **characterized in that** the outer layers have a DSC melting point or an R+B softening temperature below 130°C, above all below 120°C and more particularly below 110°C.

11. A pressure-sensitive hotmelt adhesive as claimed in claim 7, **characterized in that** the outer layers consist of a material which is also present in the core.

12. A pressure-sensitive hotmelt adhesive as claimed in claim 7, **characterized in that** more than 50% by weight of the outer layers consist of at least one thermoplastic elastomer from the group consisting of SBS, SIS, ethylene/vinyl acetate, ethylene/propylene, polyether/urethane, polyester/urethane, silicone, polyester and/or natural rubber.

13. The use of the pressure-sensitive hotmelt adhesive claimed in at least one of claims 7 to 12 for bonding substrates, **characterized in that** the granules are melted and then applied in molten form.

## Revendications

1. Procédé de préparation d'une colle auto-adhésive à chaud, sous forme d'un granulé, **caractérisé en ce qu'**on
a) fond les composants du noyau,
b) granule la masse fondue sous l'eau,
c) refroidit le granulé produit sous l'eau à des températures tellement basses que l'adhésivité de la surface des noyaux est supprimée pendant au moins 15 minutes, de manière appropriée à des températures inférieures à 15°C, de préférence inférieures à 10°C, et en particulier inférieures à 5°C,
d) sèche et enrobe le granulé produit sous l'eau, refroidi selon le procédé du lit fluidisé dans lequel on le sèche de préférence en continu dans une première zone d'une conduite de fluidisation et on l'enrobe dans au moins une zone supplémentaire selon l'étape de procédé e),
e) enrobe le granulé produit sous l'eau, séché, en lui appliquant par pulvérisation un composant d'enrobage liquide finement divisé, contenant au moins un élastomère thermoplastique non auto-adhésif jusqu'à 45°C et/ou au moins un plastifiant non auto-adhésif jusqu'à 45°C, jusqu'à former une couche suffisamment épaisse sur le noyau, et
f) équilibre en température le noyau enrobé à une température ambiante de 15 à 30°C, en particulier d'environ 20°C.

2. Procédé selon la revendication 1, **caractérisé en ce que** le granulé est conduit statistiquement plusieurs fois, avec un fort mouvement, devant au moins une buse, à partir de laquelle le composant d'enrobage est pulvérisé sur le granulé, le mouvement étant produit par tourbillonnement avec de l'air froid de 25 à 50°C, de préférence de 30 à 40°C.

3. Procédé selon la revendication 1, **caractérisé en ce que** l'on sèche le granulé produit sous l'eau, refroidi, avec de l'air de 5 à 40°C, en particulier de 10 à 25°C.

4. Procédé selon la revendication 1, **caractérisé en ce que** le composant d'enrobage liquide, finement divisé, contient de 20 à 90, en particulier de 20 à 40% en poids d'eau.

5. Procédé selon la revendication 1, **caractérisé en ce que** le séchage et l'enrobage ont lieu en l'espace de 15 minutes, de préférence en l'espace de 10 minutes, et en particulier en l'espace de 2 minutes.

6. Procédé selon la revendication 1, **caractérisé en ce que** l'on enrobe le noyau des couches externes au moins d'une façon si complète que le granulé peut s'écouler, de préférence **en ce que** l'on enrobe le noyau de granulé jusqu'à 90, en particulier jusqu'à 99%.

7. Colle auto-adhésive à chaud sous forme d'un granulé enrobé, pouvant être obtenue par le procédé selon l'une quelconque des revendications 1 à 6, **caractérisée en ce que** le composant d'enrobage contient au moins un plastifiant non auto-adhésif jusqu'à 45°C.

8. Colle auto-adhésive à chaud selon la revendication 7, **caractérisée en ce que** le granulé possède un diamètre de grain de 1 à 30 mm, de préférence de 4 à 10 mm.

9. Colle auto-adhésive à chaud selon la revendication 7, **caractérisée en ce que** la proportion pondérale des couches externes fait au total 0,5 à 10, préférence 1 à 5, et en particulier 1 à 2% en poids de la colle auto-adhésive à chaud.

10. Colle auto-adhésive à chaud selon la revendication 7, **caractérisée en ce que** les couches externes ont un point de fusion selon des mesures de calorimétrie différentielle à balayage (DSC) ou une température de ramollissement, selon le procédé R + B (bille et anneau), inférieurs à 130°C, surtout inférieurs à 120°C, et en particulier inférieurs à 110°C.

11. Colle auto-adhésive à chaud selon la revendication 7, **caractérisée en ce que** les couches externes sont constituées d'une matière qui est également contenue dans le noyau.

12. Colle auto-adhésive à chaud selon la revendication 7, **caractérisée en ce que** les couches externes sont constituées à raison de plus de 50% en poids d'au moins un élastomère thermoplastique issu du groupe formé par les caoutchoucs SBS, SIS, éthylène/acétate de vinyle, éthylène/propylène, polyéther/uréthane, polyester/uréthane, siliconés, polyester et/ou le caoutchouc naturel.

13. Utilisation de la colle auto-adhésive à chaud selon l'une quelconque des revendications 7 à 12, pour coller des substrats, dans laquelle on fond le granulé, puis on applique la masse fondue.
